# EUROPÄISCHE PATENTSCHRIFT

(11) **EP 1 922 219 B1**
(45) Veröffentlichungstag und Bekanntmachung des Hinweises auf die Patenterteilung: **24.02.2010**
(21) Anmeldenummer: 06791359.0
(22) Anmeldetag: 06.09.2006
(51) Int. Cl.: B60J 7/14, B60J 10/00

(54) **FAHRZEUGDACH**
VEHICLE ROOF
TOIT DE VÉHICULE À MOTEUR

(30) Priorität: 09.09.2005 DE 102005043020
(43) Veröffentlichungstag der Anmeldung: 21.05.2008
(73) Patentinhaber: Webasto AG, 82131 Stockdorf (DE)
(72) Erfinder: BETZL, Thomas, 82364 Andechs (DE); BROSS, Alexander, 82234 Wessling (DE)
(86) Internationale Anmeldenummer: PCT/DE2006/001566
(87) Internationale Veröffentlichungsnummer: WO 2007/028371

(56) Entgegenhaltungen:
- EP-A2- 1 103 402
- DE-A1- 3 808 224
- DE-C1- 19 539 086
- DE-C1- 19 540 413

## Beschreibung

Die Erfindung betrifft ein Fahrzeugdach mit mindestens zwei starren Dachsegmenten, die zwischen einer einen Fahrzeuginnenraum überdeckenden Schließstellung und einer den Fahrzeuginnenraum freigebenden Ablagestellung verstellbar sind.

Ein derartiges Fahrzeugdach ist beispielsweise aus der DE 3808224 A1 oder der DE 195 39 086 C1 bekannt und als so genanntes RHT(Retractable Hard Top)-Dach eines als Cabriolet ausgeführten Kraftfahrzeugs ausgebildet. Das aus der DE 195 39 086 C1 bekannte Fahrzeugdach ist fünfteilig ausgebildet und umfasst ein vorderes, an einen vorderen Windlauf grenzendes Dachsegment, das in Schließstellung des Daches beidseits jeweils von einem Dachseitenholmsegment begrenzt ist. An das vordere Dachsegment grenzt ein mittleres Dachsegment, an welches wiederum ein hinteres Dachsegment grenzt. Ausgehend von der Schließstellung können die einzelnen Dachsegmente so übereinander verschwenkt werden, dass sie in einem Verdeckablagekasten ablegbar sind.

Wenn nun das vordere Dachsegment als Deckelelement eines außen laufenden Schiebedachs ausgebildet sein soll, ist es erforderlich, dass sowohl im Bereich der beiden Dachseitenholme als auch im Bereich des mittleren Dachsegments Führungen für das Deckelelement ausgebildet sind. Insbesondere im Bereich des mittleren Dachsegments müssen Trägerelemente durch sich in Fahrzeuglängsrichtung erstreckende Schlitze in die Führungen eingreifen können. Zur Dichtung können im Bereich der Schlitze Dichteinrichtungen vorgesehen sein, welche von Trägerelementen des Deckelelements durchgriffen werden. Im Bereich der Führungen kann es aber trotz der Dichteinrichtungen zu Undichtigkeiten zu einer unerwünschten Ansammlung von Leckwasser kommen.

Der Erfindung liegt die Aufgabe zugrunde, ein Fahrzeugdach der einleitend genannten Gattung bereitzustellen, das mit einem außen laufenden Schiebedach versehen ist und bei dem Leckwasser aus dem Bereich der Führungen des Schiebedachs in einfacher Weise abgeführt werden kann.

Diese Aufgabe ist erfindungsgemäß durch das Fahrzeugdach mit den Merkmalen des Patentanspruchs 1 gelöst.

Der Kern der Erfindung liegt mithin darin, ein als so genanntes RHT ausgeführtes Fahrzeugdach eines Cabriolets im Bereich der Führungsanordnungen eines außen laufenden Schiebedachs mit einer Wasserauffangvorrichtung zu versehen, die Leckwasser sammelt und in Fahrzeuglängsrichtung abtransportieren kann, Leckwasser, das von oben über im dem Dach vorhandene Schlitze in die Führungsanordnung des ausstellbaren Schiebedachs eindringt, kann damit die Funktion des Schiebedachs und einer Öffnungs- und Schließmechanik des Fahrzeugdachs nicht beeinträchtigen und beim Ablegen des Fahrzeugdaches in dem Verdeckablagekasten auch nicht unkontrolliert von den Dachsegmenten abtropfen, sondern vielmehr unschädlich abgeführt werden. Mit der Wasserablaufrinne ist auch eine Entwässerung tiefer liegender Bereiche der Führungsanordnungen möglich.

Zum Abführen des Leckwassers aus der insbesondere aus Kunststoff gefertigten Wasserablaufrinne kann diese in ihrem hinteren Bereich über einen Ablaufschlauch entleerbar sein. Der Ablaufschlauch, der insbesondere an der hinteren Stirnseite abzweigt, ist beispielsweise entlang eines Lenkersystems zum Öffnen und Schließen des Fahrzeugsdachs zu einem Radkasten auf der betreffenden Führungsanordnungsseite oder einem Seitenscheibenschacht geführt.

Um Bewegungen des Lenkersystems aufnehmen zu können, ist es vorteilhaft, wenn der Ablaufschlauch einen faltenbalgartigen Einsatz hat, der die Flexibilität des Ablaufschlauchs in kritischen Bereichen erhöht.

Des Weiteren ist es vorteilhaft, wenn die Wasserablaufrinne an ihrer vorderen Stirnseite mit einem Stutzen versehen ist, der in Schließstellung des Fahrzeugdachs in eine Öffnung eines vorderen Windlaufs eingreift. Diese Öffnung ist dann zweckmäßigerweise mit einem Ablaufkanal verbunden, der beispielsweise über eine A-Säule der betreffenden Fahrzeugseite zu einem vorderen Radkasten führt und das Leckwasser über diesen abführt. Das Leckwasser kann dann unabhängig von der Neigungsrichtung des Fahrzeugs bzw. der Wasserablaufrinne abgeführt werden.

Um auch Leckwasser, das sich in einem zwischen den Dachsegmenten angeordneten Dicht- und Entwässerungssystem ansammelt, in kontrollierter Weise abführen zu können, ist es vorteilhaft, wenn der hintere Wasserablaufschlauch mit einem T-Stück versehen ist, in das ein Kanal eines zwischen den Dachsystemen angeordneten Dicht- und Entwässerungssystems mündet. Das Dicht- und Entwässerungssystem muss dann nicht mit gegebenenfalls störenden Öffnungen zur Fahrzeugaußenseite versehen sein.

Die Auslegung eines Fahrzeugdachs im Sinne der Erfindung ist insbesondere vorteilhaft, wenn das Fahrzeugdach zwei Dachseitenholmsegmente aufweist, zwischen denen ein vorderes, als Ausstellschiebedeckel dienendes Dachsegment und ein mittleres Dachsegment angeordnet sind, an das sich in Schließstellung ein hinteres Dachsegment anschließt, wobei zwischen den Dachseitenholmsegmenten einerseits und dem vorderen Dachsegment und dem mittleren Dachsegment andererseits jeweils eine Führungsanordnung für den Ausstellschiebedeckel angeordnet ist und das Dicht- und Entwässerungssystem in Schließstellung in den Übergangsbereichen zwischen den einzelnen Segmenten angeordnet ist. Die Führungsanordnung für das außen laufende Schiebedachdeckelement ist dann an den Dachseitenholmsegmenten und dem mittleren Dachsegment fixiert.

Die Dachseitenholmsegmente können bei einer speziellen Ausführungsform des Fahrzeugsdachs nach der Erfindung bezogen auf die Fahrzeuglängsmittelebene nach außen verschwenkt werden und dann in einem Verdeckablagekasten abgelegt werden, wobei die vorderen Enden der Dachseitenholmsegmente dann seitlich neben einer Rückbank abgelegt sind. Ein derartiges Verschwenken der Dachseitenholmsegmente erhöht das seitliche Platzangebot im Fondbereich des Fahrzeugs. Bei dieser Ausführungsform ist es zweckmäßig, wenn die Führungsanordnungen beidseits des außen laufenden Schiebedachdeckelelements jeweils aus zwei Teilstücken gebildet sind. Das vordere Teilstück wird dann mit dem jeweiligen Dachseitenholmsegment nach außen geschwenkt, wohingegen das hintere Teilstück mit dem mittleren Dachsegment verbunden bleibt. Um die Relativbewegung zwischen den beiden Teilstücken der jeweiligen Führungsanordnung aufnehmen zu können, ist die der jeweiligen Führungsanordnung zugeordnete Wasserablaufrinne vorzugsweise im Bereich des Übergangs zwischen den Teilstücken mit einem elastisch längbaren Abschnitt versehen. Dieser kann insbesondere wellbalgartig ausgebildet sein.

Das Dicht- und Entwässerungssystem ist vorzugsweise so ausgebildet, dass es mindestens einen wannenartigen Abschnitt aufweist, an dem der zu dem T-Stück des hinteren Ablaufschlauchs führende Kanal austritt. Dies wirkt einem Überlaufen des Dicht- und Entwässerungssystems auch bei großen Leckwassermengen entgegen.

Die Fixierung der Wasserablaufrinne kann in vielfältiger Weise erfolgen, ist aber bei einer bevorzugten Ausführungsform des Fahrzeugdachs nach der Erfindung derart ausgeführt, dass die Wasserablaufrinne an der Führungsanordnung verrastet ist. Dies kann mittels an der Wasserablaufrinne beidseits ausgebildeten Rastschienen erfolgen, die jeweils in einen korrespondierenden Hinterschnitt der betreffenden Führungsanordnung eingreifen.

Weitere Vorteile und vorteilhafte Ausgestaltungen des Gegenstands nach der Erfindung sind der Beschreibung, der Zeichnung und den Patentansprüchen entnehmbar.

Ein Ausführungsbeispiel des Fahrzeugdachs nach der Erfindung ist in der Zeichnung schematisch vereinfacht dargestellt und wird in der nachfolgenden Beschreibung näher erläutert. Es zeigt
- Fig. 1: eine perspektivische Draufsicht auf ein Fahrzeugdach nach der Erfindung;
- Fig. 2: ein Dicht- und Entwässerungssystem des Fahrzeugsdachs nach Fig. 1;

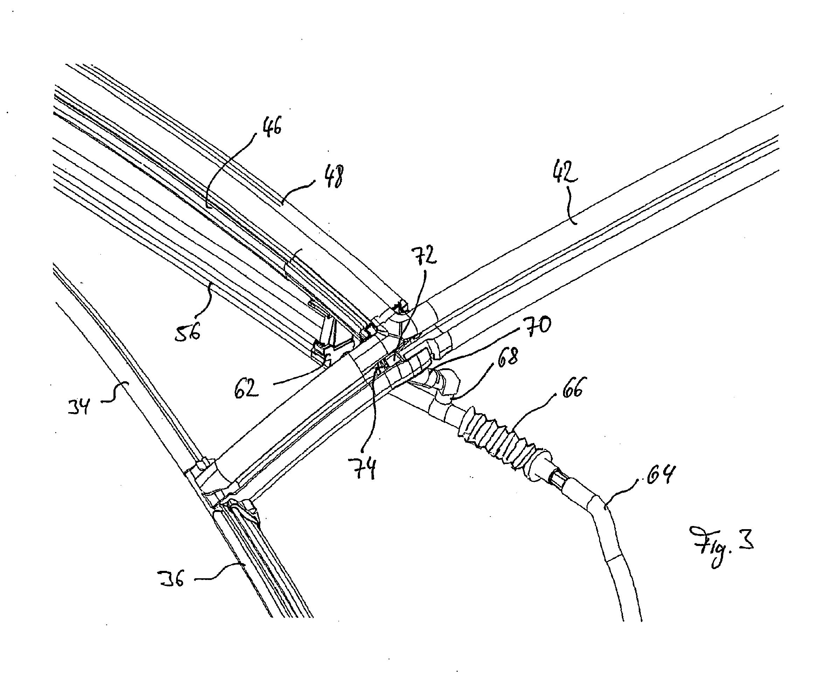

- Fig. 3: eine vergrößerte Ansicht des Bereichs III in Fig. 2;

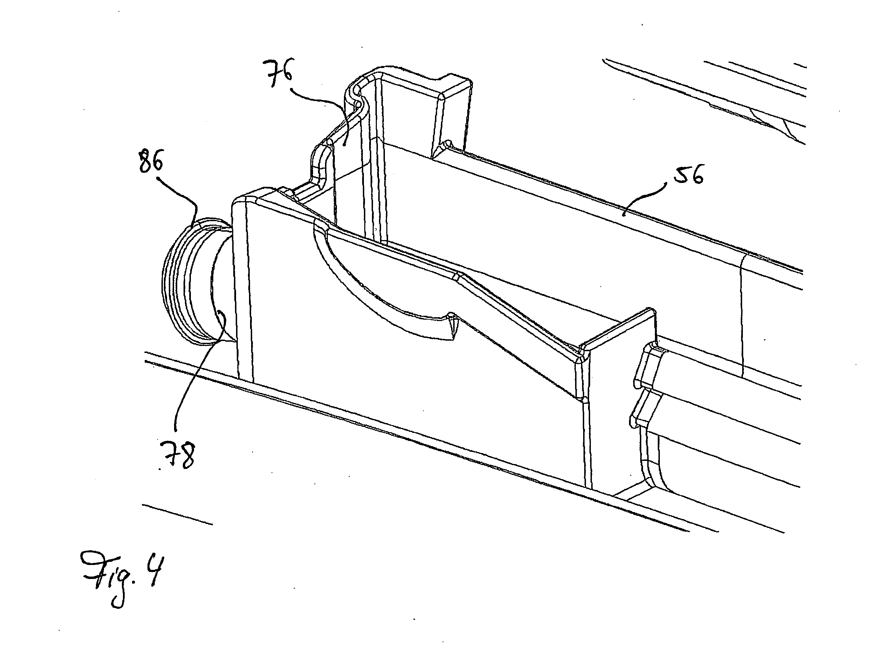

- Fig. 4: eine vergrößerte Ansicht eines vorderen Stirnbereichs einer Entwässerungsrinne;
- Fig. 5: einen stark schematisierten Schnitt durch einen Windlauf mit damit verbundenem Dachseitenholsegment;

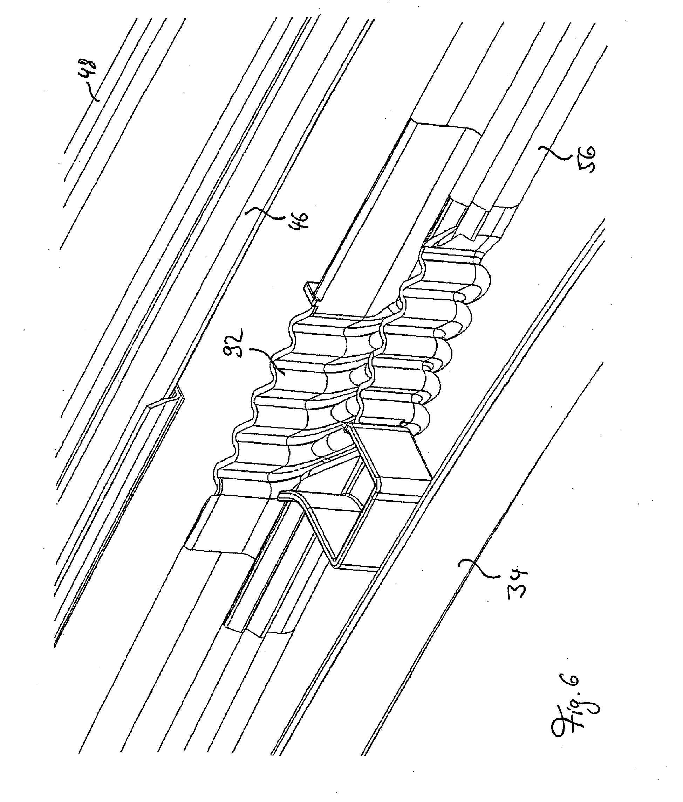

- Fig. 6: eine vergrößerte Ansicht des Bereichs VI in Fig. 2; und
- Fig. 7: einen schematischen Schnitt entlang der Linie VII-VII in Fig. 1.

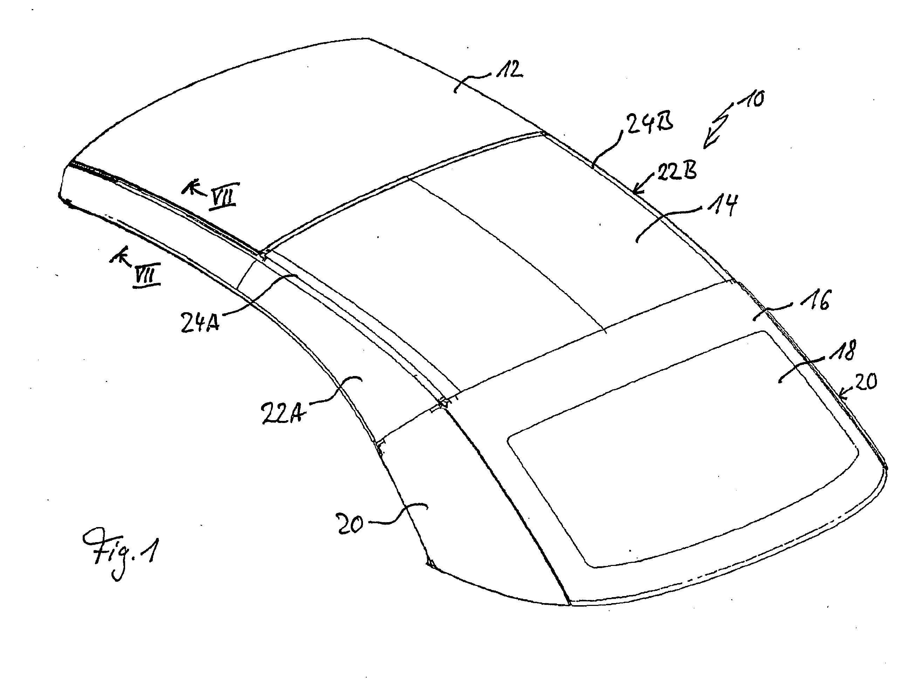

In Fig. 1 ist ein Fahrzeugdach 10 dargestellt, das ein sogenanntes RHT (Retractable Hard Top) eines als Cabriolet ausgeführten Kraftfahrzeugs ist und wahlweise zwischen einer einen Fahrzeuginnenraum überdeckenden Schließstellung und einer den Fahrzeuginnenraum freigebenden Ablagestellung verstellbar ist. In Fig. 1 ist die Schließstellung dargestellt, in der das Fahrzeugdach 10 eine starre Dachhaut des betreffenden Fahrzeugs bildet. Das Fahrzeugdach 10 kann zur Freigabe des Fahrzeuginnenraums in einem heckseitigen, hier ebenfalls nicht näher dargestellten, in üblicher Weise ausgeführten verdeckablagekasten abgelegt werden.

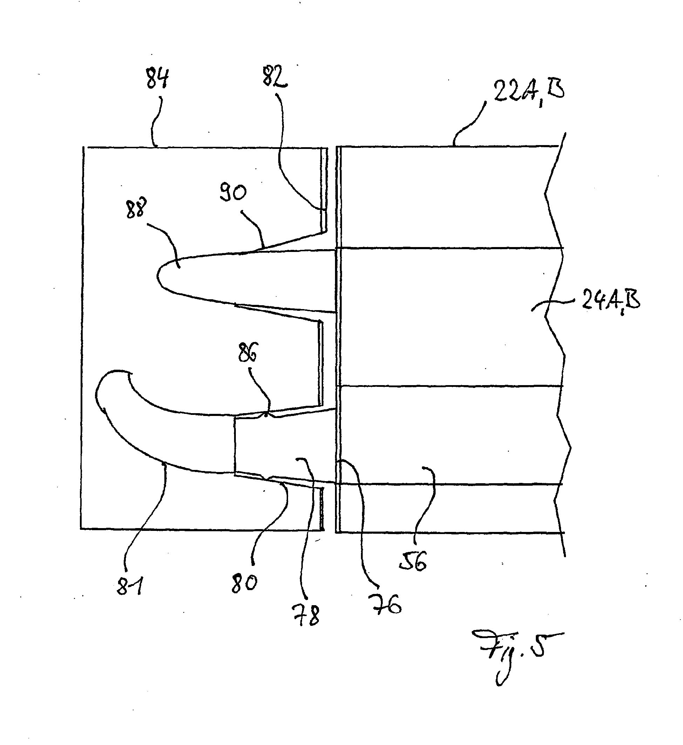

Das Fahrzeugdach 10 umfasst ein vorderes Dachsegment 12, ein mittleres Dachsegment 14 und ein hinteres Dachsegment 16, das eine Heckscheibe 18 des Kraftfahrzeugs aufnimmt und sogenannte C-Säulen 20 des Fahrzeughauptbaus umfasst. Des Weiteren umfasst das Fahrzeugdach 10 ein linkes Dachseitenholmsegment 22A und ein rechtes Dachseitenholmsegment 22B, welche sich in Fahrzeuglängsrichtung erstrecken und in Schließstellung des Fahrzeugdachs 10 das vordere Dachsegment 12 und das mittlere Dachsegment 14 seitlich begrenzen. Wie Fig. 5 zu entnehmen ist, grenzen in der in Fig. 1 dargestellten Schließstellung die vorderen freien Stirnseiten der Dachseitenholmsegmente 22A und 22B an einen A-Säulen des Fahrzeugaufbaus verbindenden vorderen Windlauf 84.

Das Öffnen des Fahrzeugdachs 10 erfolgt derart, dass zunächst das vordere Dachsegment 12, das als außen laufendes Schiebedachdeckelelement ausgeführt ist, über das mittlere Dachsegment 14 verfahren wird, die Dachseitenholmsegmente 22A, 22B bezogen auf die Fahrzeuglängsmittelebene nach außen verschwenkt werden, das hintere Dachsegment 16 über die aus dem vorderen Dachsegment 12 und dem mittleren Dachsegment 14 gebildete Einheit verschwenkt wird und dann das Paket aus mittlerem Dachsegment 14, vorderem Dachsegment 12, hinterem Dachsegment 16 und Dachseitenholmsegmenten 22A, 22B mittels eines hier nicht näher dargestellten Lenkersystems in dem Verdeckablagekasten abgelegt wird.

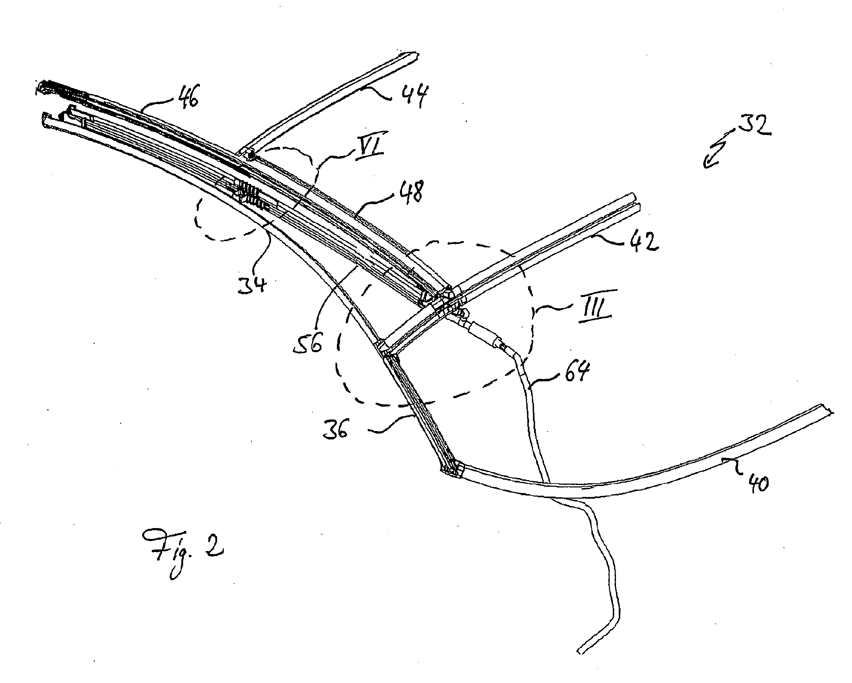

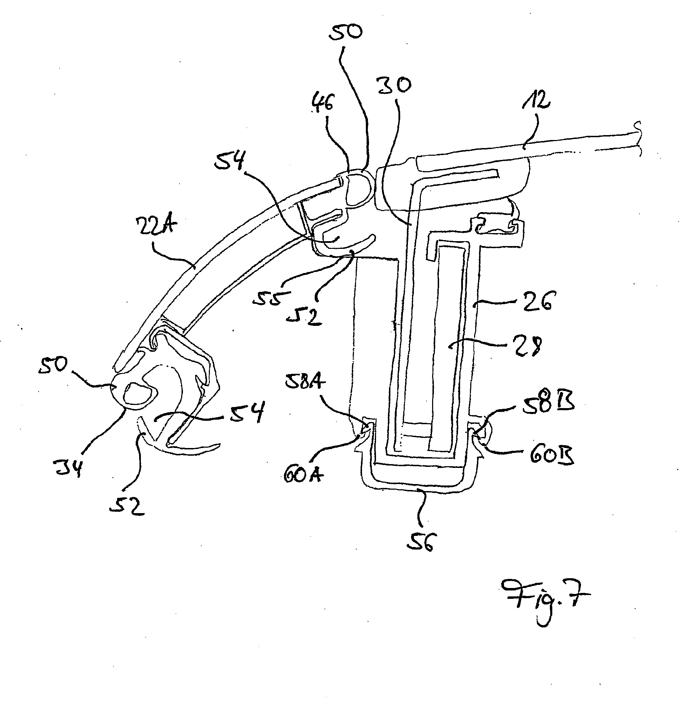

Das vordere Dachsegment 12, das als außen laufendes Schiebedachdeckelelement ausgebildet ist, ist bei ansonsten geschlossenen Fahrzeugdach 10 zur Öffnung einer von den Dachseitenholmsegmenten 22A, 22B, dem vorderen Windlauf und dem mittleren Dachsegment 14 begrenzten Dachöffnung separat nach hinten über das mittlere Dachsegment 14 verfahrbar. Zur Führung des vorderen Dachsegmentes 12 sind Führungsanordnungen 24A, 24B vorgesehen, die sich in Schließstellung des Fahrzeugdachs 10 entlang des jeweils zugeordneten Dachseitenholmsegmentes 22A bzw. 22B erstrecken und, wie insbesondere Fig. 7 bezüglich des linken Dachbereichs zu entnehmen ist, jeweils eine Führungsschiene 26 umfassen, in der ein Gleitelement 28 in Fahrzeuglängsrichtung verschiebbar geführt ist, das über einen Träger 30 mit dem vorderen Dachsegment 12 verbunden ist. Beim Zurückfahren des vorderen Dachsegmentes 12 über das mittlere Dachsegment 14 durchgreift der schwertartige Träger 30 einen Schlitz zwischen dem mittleren Dachsegment 14 und dem zugeordneten Dachseitenholmsegment 22A bzw. 22B, welcher mittels eines insbesondere in Fig. 2 dargestellten Dicht- und Entwässerungssystems 32 abgedichtet ist.

Das Dicht- und Entwässerungssystem 32 erstreckt sich entlang der Begrenzungen des Fahrzeugdachs 10 sowie entlang der Übergänge zwischen den einzelnen Dachsegmenten 12, 14, 16, 22A und 22B. Das Dicht- und Entwässerungssystem 32 ist in Fig. 2 für den in Fahrtrichtung linken Bereich des Fahrzeugdachs 10 dargestellt. Im rechten Bereich des Fahrzeugdachs 10 ist das Dicht- und Entwässerungssystem 32 spiegelsymmetrisch hierzu ausgebildet.

Das Dicht- und Entwässerungssystem 32 umfasst im rechten Bereich des Fahrzeugdachs 10 ein äußeres Dichtprofil 34, das zwischen dem Dachseitenholmsegment 22A und hier nicht näher dargestellten Seitenfenstern des Fahrzeugs angeordnet ist, ein sich an das Dichtprofil 34 anschließendes Dichtprofil 35, das das hintere Dachsegment 16 seitlich begrenzt und sich an ein hinteres Seitenfenster des Fahrzeugaufbaus anschließt. Des Weiteren ist an einem unteren Rand des hinteren Dachsegments 16 ein hinteres Dichtprofil 40 ausgebildet, das im geschlossenen Zustand des Fahrzeugdachs 10 einen Spalt zwischen dem hinteren Dachsegment 16 und einem Verdeckablagekastendeckel dichtet. Zur Dichtung eines Spalts zwischen dem hinteren Dachsegment 16 und dem mittleren Dachsegment 14 ist ein sich in Fahrzeugquerrichtung erstreckendes Dichtprofil 42 vorgesehen. Zur Dichtung eines Spalts zwischen dem mittleren Dachsegment 14 und dem vorderen Dachsegment 12 ist ebenfalls ein sich in Fahrzeugquerrichtung erstreckendes Dichtprofil 44 ausgebildet. Entlang der Innenseite des Dachseitenholmsegmentes 22A ist ein sich in Fahrzeuglängsrichtung erstreckendes Dichtprofil 46 vorgesehen, das an dem Dachseitenholmsegment 22A fixiert ist. Im Bereich zwischen dem Dachseitenholmsegment 22A und dem mittleren Dachsegment 14 ist ein weiteres Dichtprofil 48 ausgebildet. Beim Zurückfahren des vorderen, als außen laufendes Schiebedach ausgebildeten Dachsegmentes 14 verfährt der Träger 30 zwischen dem Dichtprofil 48 und dem Dichtprofil 46 nach hinten bzw. beim Schließen des vorderen Dachsegmentes 12 nach vorne.

Wie insbesondere Fig. 7 an Hand der Dichtprofile 34 und 46 zu entnehmen ist, weisen die Dichtprofile jeweils einen Primärschlauch 50 und eine Sekundärlippe 52 auf. Zwischen dem Primärschlauch 50 und der Sekundärlippe 52 liegt jeweils eine Leckwasserrinne 54.

Des Weiteren ist zwischen dem Dichtprofil 46 und der Führungsschiene 26 eine flexible Wasserleitfolie 55 gespannt, die damit das Dachseitenholmsegment 22A mit der Führungsschiene 26 dichtend verbindet und gegebenenfalls anfallendes Leckwasser in den Bereich der Führungsschiene 26 leitet. Dies ist insbesondere vorteilhaft, wenn der Dachfugenverlauf nicht parallel zur Führungsschiene verläuft.

Unter der Führungsschiene 26 ist des Weiteren eine aus Kunststoff gefertigte Wasserablaufrinne 56 angeordnet, die mittels Rastschienen 58A und 58B an korrespondierenden Rastschienen 60A und 60B der Führungsschiene 26 fixiert ist.

Die Wasserablaufrinne 56 hat heckseitig eine Stirnwand 62 mit einer Öffnung, an die sich ein Wasserablaufschlauch 64 anschließt. Der Wasserablaufschlauch 64, der zur Aufnahme von Bewegungen des Lenkersystems zum Öffnen und Schließen des Fahrzeugdachs mit einem wellbalgartigen Abschnitt 66 versehen ist, ist entlang des Lenkersystems zum Öffnen und Schließen des Fahrzeugdachs geführt und im Bereich des hinteren linken Radkastens mit der Fahrzeugaußenseite verbunden. In der Wasserablaufrinne 56 gesammeltes Wasser kann damit kontrolliert über den Ablaufschlauch 64 und den Radkasten an die Umgebung abgeführt werden.

Stromauf des wellbalgartigen Abschnitts 66 ist der Ablaufschlauch 64 mit einem T-Stück 68 versehen, an dem ein Kanal 70 mündet, der mit einem wannenartigen Abschnitt 72 im Bereich einer Leckwasserrinne des zwischen dem hinteren Dachsegment 16 und dem mittleren Dachsegment 14 angeordneten Dichtprofils 42 verbunden ist, das ebenfalls mit einem Primärschlauch und einer Sekundärlippe versehen ist, zwischen welchen die Leckwasserrinne liegt. Diese Leckwasserrinne ist des Weiteren mit einer Trennwand 74 unterbrochen, die bezogen auf die Fahrzeuglängsmittelebene weiter außen als der wannenartige Abschnitt 72 liegt und die gewährleistet, dass im Wesentlichen kein Leckwasser, das sich in dem Dichtprofil 42 ansammelt, nach außen fließt, sondern vielmehr über den wannenartigen Abschnitt 72 und den von diesem abzweigenden Kanal 70 zu dem Ablaufschlauch 64 und von dort zu dem betreffenden Radkasten geführt wird.

Die Wasserablaufrinne 56 hat des Weiteren eine vordere Stirnwand 76, die mit einem rüsselartigen.Wasserablaufstutzen 78 versehen ist, der in Schließstellung des Fahrzeugdachs 10 mit einer korrespondierenden Öffnung 80 eines Beschlags 82 des vorderen Windlaufs 84 zusammenwirkt und hierzu eine Dichtlippe 86 aufweist. Eine Zentrierung des Wasserablaufstutzens 78 bezüglich der Öffnung 80 erfolgt mittels eines an dem betreffenden Dachseitenholmsegment 22A bzw. 22B ausgebildeten Verschlusszapfens 88, der in eine korrespondierende Öffnung 90 des Beschlags 82 eingreift. Nach vorne ablaufendes Leckwasser strömt aus der Wasserablaufrinne 56 über den Wasserablaufstutzen in einen sich an die Öffnung 80 anschließenden und an dem Beschlag 82 aufgesteckten Schlauch 81, der durch eine A-Säule des Fahrzeugaufbaus zu einem vorderen Radkasten geführt ist.

Des Weiteren weist die Wasserablaufrinne 56 in einem mittleren Bereich einen flexiblen, elastisch längbaren wellbalgartigen Abschnitt 92 auf, der im Übergangsbereich zwischen einem vorderen und einem hinteren Teilstück der Führungsschiene 26 liegt und ermöglicht, dass Relativbewegungen zwischen den beiden Führungsschienenteilstücken aufgenommen werden. Damit kann das vordere Führungsschienenteilstück beim Öffnen des Fahrzeugdachs 10 zusammen mit dem Dachseitenholmsegment 22A bzw. 22B bezüglich der Fahrzeuglängsmittelebene nach außen geschwenkt werden, wohingegen das hintere Führungsschienenteilstück an dem mittleren Dachsegment 14 fixiert ist.

Im Bereich der rechten Führungsanordnung 24B ist eine entsprechende, hier nicht näher dargestellte Wasserablaufrinne angeordnet.

### Bezugszeichen

- 10: Fahrzeugdach
- 12: vorderes Dachsegment
- 14: mittleres Dachsegment
- 16: hinteres Dachsegment
- 18: Heckscheibe
- 20: C-Säule
- 22A, 22B: Dachseitenholmsegment
- 24A, 24B: Führungsanordnungen
- 26: Führungsschiene
- 28: Gleitelement
- 30: Träger
- 32: Dicht- und Entwässerungssystem
- 34: Dichtprofil
- 36: Dichtprofil
- 38: Dichtprofil
- 40: Dichtprofil
- 42: Dichtprofil
- 44: Dichtprofil
- 46: Dichtprofil
- 48: Dichtprofil
- 50: Primärschlauch
- 52: Sekundärlippe
- 54: Leckwasserrinne
- 55: Wasserleitfolie
- 56: Wasserablaufrinne
- 58A, 58B: Rastschiene
- 60A, 60B: Rastschiene
- 62: Stirnseite
- 64: Wasserablaufschlauch
- 66: Abschnitt
- 68: T-Stück
- 70: Kanal
- 72: Abschnitt
- 74: Trennwand
- 76: Stirnwand
- 78: Wasserablaufstutzen
- 80: Öffnung
- 81: Schlauch
- 82: Beschlag
- 84: Windlauf
- 86: Dichtlippe
- 88: Verschlusszapfen
- 90: Öffnung
- 92: Abschnitt

## Patentansprüche

1. Fahrzeugdach, mit mindestens zwei starren Dachsegmenten (12, 14, 16), die zwischen einer einen Fahrzeuginnenraum überdeckenden Schließstellung und einer den Fahrzeuginnenraum freigebenden Ablagestellung verstellbar sind und die in Schließstellung in Fahrzeuglängsrichtung hintereinanderliegend angeordnet und in Ablagestellung in einem Verdeckablagekasten verstaut sind, **dadurch gekennzeichnet, dass** ein Dachsegment (12) als außen laufendes Schiebedachdeckelelement ausgebildet ist, das beidseits jeweils in einer sich in Fahrzeuglängsrichtung erstreckenden Führungsanordnung (24A, 24B) geführt ist, unter der eine sich in Fahrzeuglängsrichtung erstreckende Wasserablaufrinne (56) angeordnet ist.

2. Fahrzeugdach nach Anspruch 1, **dadurch gekennzeichnet, dass** die Wasserablaufrinne (56) in ihrem heckseitigen Bereich über einen an die Fahrzeugaußenseite führenden Ablaufschlauch (64) entleerbar ist.

3. Fahrzeugdach nach Anspruch 2, **dadurch gekennzeichnet, dass** der Ablaufschlauch (64) entlang eines Lenkersystems zu einem Radkasten des Fahrzeugs führt.

4. Fahrzeugdach nach Anspruch 2 oder 3, **dadurch gekennzeichnet, dass** der Ablaufschlauch (64) einen faltenbalgartigen Einsatz (66) hat.

5. Fahrzeugdach nach einem der Ansprüche 1 bis 4, **dadurch gekennzeichnet, dass** die Wasserablaufrinne (56) an ihrer vorderen Stirnseite mit einem Stutzen (78) versehen ist, der in Schließstellung in eine korrespondierende Öffnung (80) eines Ablaufkanals () im Bereich eines vorderen Windlaufs (84) des Fahrzeugs eingreift.

6. Fahrzeugdach nach einem der Ansprüche 2 bis 4, **dadurch gekennzeichnet, dass** der hintere Wasserablaufschlauch (64) mit einem T-Stück (68) versehen ist, in das ein Kanal (70) eines zwischen den Dachsegmenten (12, 14,16) angeordneten Dicht- und Entwässerungssystems (32) mündet.

7. Fahrzeugdach nach Anspruch 6, **dadurch gekennzeichnet, dass** zwei Dachseitenholmsegmente (22A, 22B) vorgesehen sind, zwischen denen ein vorderes, als außen laufender Schiebedeckel dienendes Dachsegment (12) und ein mittleres Dachsegment (14) angeordnet sind, an das sich in Schließstellung ein hinteres Dachsegment (16) anschließt, wobei zwischen den Dachseitenholmsegmenten (22A, 22B) einerseits und dem vorderen Dachsegment (12) und dem mittleren Dachsegment (14) andererseits jeweils die Führungsanordnung (24A, 24B) angeordnet ist und das Dicht- und Entwässerungssystem (32) in Schließstellung zwischen den einzelnen Segmenten in den Übergangsbereichen zwischen den einzelnen Segmenten (12, 14, 16, 22A, 22B) angeordnet ist.

8. Fahrzeugdach nach einem der Ansprüche 1 bis 7, **dadurch gekennzeichnet, dass** die Wasserablaufrinne (56) an der Führungsanordnung (24A, 24B) verrastet ist.

9. Fahrzeugdach nach einem der Ansprüche 1 bis 8, **dadurch gekennzeichnet, dass** die Führungsanordnung (24A, 24B) aus mindestens zwei Teilstücken gebildet ist und die Wasserablaufrinne (56) im Bereich des Übergangs zwischen den Teilstücken mit einem elastisch längbaren Abschnitt (92) versehen ist.

## Claims

1. Vehicle roof, with at least two rigid roof segments (12, 14, 16) which can be displaced between a closed position covering a vehicle interior and a storage position opening up the vehicle interior and which, in the closed position, are arranged consecutively in the longitudinal direction of the vehicle and, in the storage position, are stowed in a convertible-top storage compartment, **characterized in that** one roof segment (12) is designed as a sliding roof cover element which runs over the outside and is guided on both sides in a respective guide arrangement (24A, 24B) which extends in the longitudinal direction of the vehicle and below which a water drainage channel (56) which extends in the longitudinal direction of the vehicle is arranged.

2. Vehicle roof according to Claim 1, **characterized in that** the water drainage channel (56) can be emptied in its rear region via a drain hose (64) leading to the outside of the vehicle.

3. Vehicle roof according to Claim 2, **characterized in that** the drain hose (64) leads along a system of links to a wheel house of the vehicle.

4. Vehicle roof according to Claim 2 or 3, **characterized in that** the drain hose (64) has an expansion-bellows-like insert (66).

5. Vehicle roof according to one of Claims 1 to 4, **characterized in that** the water drainage channel (56) is provided on its front end side with a connecting piece (78) which, in the closed position, engages in a corresponding opening (80) of a drain passage in the region of a front cowl (84) of the vehicle.

6. Vehicle roof according to one of Claims 2 to 4, **characterized in that** the rear water drain hose (64) is provided with a T-piece (68) into which a passage (70) of a sealing and drainage system (32) arranged between the roof segments (12, 14, 16) opens.

7. Vehicle roof according to Claim 6, **characterized in that** two roof side rail segments (22A, 22B) are provided, between which a front roof segment (12), which serves as the sliding cover which runs over the outside, and a central roof segment (14), which is adjoined in the closed direction by a rear roof segment (16), are arranged, with the guide arrangement (24A, 24B) being arranged in each case between the roof side rail segments (22A, 22B), on the one hand, and the front roof segment (12) and the central roof segment (14), on the other hand, and, in the closed position between the individual segments, the sealing and drainage system (32) being arranged in the transition regions between the individual segments (12, 14, 16, 22A, 22B).

8. Vehicle roof according to one of Claims 1 to 7, **characterized in that** the water drainage channel (56) is latched to the guide arrangement (24A, 24B).

9. Vehicle roof according to one of Claims 1 to 8, **characterized in that** the guide arrangement (24A, 24B) is formed from at least two subsections, and the water drainage channel (56) is provided with an elastically extendable section (92) in the region of the transition between the subsections.

## Revendications

1. Toit de véhicule à moteur, comportant au moins deux segments de toit rigides (12, 14, 16), qui sont déplaçables entre une position de fermeture recouvrant un espace intérieur du véhicule et une position de rangement découvrant l'espace intérieur du véhicule et qui, dans la position de fermeture sont disposés l'un derrière l'autre dans la direction longitudinale du véhicule et dans la position de rangement sont rangés dans un compartiment de rangement de capote, **caractérisé en ce qu'**un segment de toit (12) se présente sous la forme d'un élément de couverture de toit coulissant glissant à l'extérieur, qui est guidé de part et d'autre chaque fois dans un dispositif de guidage (24A, 24B) s'étendant dans la direction longitudinale du véhicule, et sous lequel il se trouve une corniche d'évacuation d'eau (56) s'étendant dans la direction longitudinale du véhicule.

2. Toit de véhicule à moteur selon la revendication 1, **caractérisé en ce que** la corniche d'évacuation d'eau (56) peut se vider par un tuyau d'évacuation (64) conduisant vers le côté extérieur du véhicule dans sa région située à l'arrière.

3. Toit de véhicule à moteur selon la revendication 2, **caractérisé en ce que** le tuyau d'évacuation (64) conduit à un passage de roue du véhicule, le long d'un système de bras.

4. Toit de véhicule à moteur selon la revendication 2 ou 3, **caractérisé en ce que** le tuyau d'évacuation (64) comporte un segment de type soufflet à plis (66).

5. Toit de véhicule à moteur selon l'une quelconque des revendications 1 à 4, **caractérisé en ce que** la corniche d'évacuation d'eau (56) est pourvue, à son extrémité frontale avant, d'un embout (78) qui, dans la position de fermeture, s'engage dans une ouverture correspondante (80) d'un canal d'évacuation dans la région d'une arcade avant (84) du véhicule.

6. Toit de véhicule à moteur selon l'une quelconque des revendications 2 à 4, **caractérisé en ce que** le tuyau d'évacuation d'eau arrière (64) est pourvu d'une pièce en T (68), dans laquelle débouche un canal (70) d'un système d'étanchéité et de drainage (32) disposé entre les segments de toit (12, 14, 16).

7. Toit de véhicule à moteur selon la revendication 6, **caractérisé en ce qu'**il est prévu deux segments de longeron latéraux de toit (22A, 22B), entre lesquels sont disposés un segment de toit avant (12) servant de couverture coulissante glissant à l'extérieur et un segment de toit médian (14), auquel se raccorde en position de fermeture un segment de toit arrière (16), dans lequel le dispositif de guidage (24A, 24B) est disposé chaque fois entre les segments de longeron latéraux de toit (22A, 22B) d'une part et entre le segment de toit avant (12) et le segment de toit médian (14) d'autre part, et le système d'étanchéité et de drainage (32) est disposé, dans la position de fermeture, entre les segments individuels dans les régions de transition entre les segments individuels (12, 14, 16, 22A, 22B).

8. Toit de véhicule à moteur selon l'une quelconque des revendications 1 à 7, **caractérisé en ce que** la corniche d'évacuation d'eau (56) est encliquetée sur le dispositif de guidage (24A, 24B).

9. Toit de véhicule à moteur selon l'une quelconque des revendications 1 à 8, **caractérisé en ce que** le dispositif de guidage (24A, 24B) est formé d'au moins deux pièces partielles et la corniche d'évacuation d'eau (56) est pourvue d'un segment (92) apte à s'allonger élastiquement dans la région de la transition entre les pièces partielles.
